# EUROPÄISCHE PATENTSCHRIFT

(11) **EP 3 866 280 B1**
(45) Veröffentlichungstag und Bekanntmachung des Hinweises auf die Patenterteilung: **19.04.2023**
(21) Anmeldenummer: 20156736.9
(22) Anmeldetag: 11.02.2020
(51) Int. Cl.: H01R 13/6473, H01R 13/6589, H01R 13/59

(54) **DATENKABEL-STECKVERBINDER FÜR EINE DATENÜBERTRAGUNG**
DATA CABLE CONNECTOR FOR DATA TRANSMISSION
CONNECTEUR ENFICHABLE DE CÂBLE DE DONNÉES POUR UN TRANSFERT DE DONNÉES

(43) Veröffentlichungstag der Anmeldung: 18.08.2021
(73) Patentinhaber: ERICH JAEGER GmbH + Co. KG, 61169 Friedberg (DE)
(72) Erfinder: Markefka, Klaus, 61197 Florstadt (DE)
(74) Vertreter: Keil & Schaafhausen Patentanwälte PartGmbB

(56) Entgegenhaltungen:
- EP-A1- 3 319 182

## Beschreibung

Die Erfindung betrifft einen Datenkabel-Steckverbinder für eine Datenübertragung nach dem Obergriff des Anspruchs 1 und eine Verwendung eines Datenkabel-Steckverbinders nach Anspruch 13.

Eine solche Datenübertragung kann beispielsweise zwischen einem Zugfahrzeug und einem Anhänger oder zwischen einem Fahrzeug und einer Fahrzeugmaschine, bspw. einem landwirtschaftlichen Fahrzeug und einer an dem landwirtschaftlichen Fahrzeug festlegbaren landwirtschaftlichen Maschine, verwendet werden. Der Datenkabel-Steckverbinder weist mindestens einen Steckerkörper auf, der eine Kabelanschlussseite, eine Steckeranschlussseite und eine, insbesondere die Kabelanschlussseite und die Steckeranschlussseite umgebende, Steckerschirmung aufweist. Die Kabelanschlussseite ist zum Anschließen eines geschirmten Datenkabels mit mindestens einem ersten isolierten Leiter und einem zweiten isolierten Leiter zur Datenübertragung und einer zumindest die ersten und zweiten isolierten Leiter umgebenden Leitungsschirmung ausgebildet. Sie weist eine erste Anschlussführung für den ersten isolierten Leiter, eine zweite Anschlussführung für den zweiten isolierten Leiter und einen Schirmungsanschluss für die Leitungsschirmung auf. Eine Schirmung für Datenkabel und deren Steckverbinder ist für eine Datenübertragung mit hoher Datenrate zur Vermeidung von Störungen unerlässlich.

Ferner weist die Steckeranschlussseite des Datenkabel-Steckverbinders einen Kontaktträger mit Kontaktöffnungen zur Aufnahme von mit den ersten und zweiten isolierten Leitern verbindbaren ersten und zweiten Kontakten auf. Die Kontaktöffnungen sind als (vorzugsweise gerade bzw. geradlinig verlaufende) Durchgangsöffnungen in dem Kontaktträger in einer Axialrichtung des Datenkabel-Steckverbinders parallel in einem Kontaktabstand verlaufend angeordnet, so dass ein Stecker mit in dem Kontaktabstand angeordneten ersten und zweiten Steckerkontakten mit den ersten und zweiten Kontakten des Kontaktträgers zur Datenübertragung, insbesondere durch Aufstecken des Steckers auf die Steckverbinderanschlussseite des Datenkabel-Steckverbinders, verbindbar ist.

Leiterpaare in Kabeln, insbesondere in Datenkabeln, weisen üblicherweise einen geringen Abstand auf. Häufig sind diese auch verdrillt. Die Dicke der einzelnen isolierten Leiter, und damit auch des gesamten Kabels, beeinfluss insbesondere auch die maximale Länge des Kabels, über die eine zuverlässige Datenübertragung möglich ist. Für Steckverbinder, die teilweise mehrere tausendmal gesteckt werden, ist mitunter eine Optimierung der Haptik und/oder der Haltbarkeit erforderlich. Damit geht häufig eine Verdickung der Steckkontakte einher, um den Ansprüchen der Anwender zu genügen. Dickere Steckkontakte werden auch notwendig, wenn sie Leiter unterschiedlicher Durchmesser miteinander verbinden sollen, bspw. um die Gesamtlänge des Kabels bei der Datenübertragung zu erhöhen.

Hierzu muss der Abstand der im Kabel befindlichen insolierten Leiter im Steckerkörper vergrößert werden. Es ist jedoch bekannt, dass insbesondere geometrische Änderungen an Steckverbindern oder Änderungen des Abstands von Leitern zu Störstellen bei der Datenübertragung führen.

Gerade bei einer hochfrequenten Datenübertragung minimieren solche Störstellen insbesondere die möglichen Datenraten bei der Datenübertragung. Die Störstellen einer Steckverbinderanordnung ergeben sich insbesondere in Form von Impedanzänderungen des Kabels, das Einfluss auf die in dem Kabel übertragenen Signalwellen hat. Aus dem Stand der Technik, unter anderem aus Dokument DE 10 2018 208 532 A1, ist es bekannt, dass die Impedanz einer Steckverbinderanordnung zwischen Stecker und Gegenstecker entlang der Steckrichtung konstant oder nahezu konstant gehalten werden soll. Der Stand der Technik schlägt hierzu eine Impedanzausgleichseinrichtung vor, die einen Induktivitätsabschnitt und einen Kapazitätsabschnitt aufweist, wobei der Induktivitätsabschnitt einen variablen Induktivitätsbeitrag zu Impedanz und der Kapazitätsabschnitt einen variablen Kapazitätsbeitrag zu Impedanz erzeugt, wobei der Induktivitätsbeitrag gegengleich zum Kapazitätsbeitrag sein muss, um die Impedanz konstant zu halten. Hierzu wird ein Induktivitätsabschnitt offenbart, der mehrere auslenkbare Teile umfasst, wobei durch die Auslenkung des Induktivitätsabschnitts der Induktivitätsbeitrag erhöht und ein Kapazitätsbeitrag ausgeglichen werden kann.

Eine alternative Möglichkeit die Impedanz einer Steckverbinderanordnung zu beeinflussen wird in Dokument DE 10 2018 104 253 B4 offenbart, wobei die Impedanz insbesondere dadurch beeinflusst wird, dass der Abstand zwischen einem Außenleiter und Leitern eines Leiterpaares oder der Abstand zwischen den Leitern des Leiterpaares verändert wird.

Dokument EP 3 319 182 A1 offenbart eine Steckverbinderanordnung mit einem Steckverbinder und einem daran angeschlossenen Kabel mit jeweils wenigstens einem Leiterpaar, wobei das Kabel einen ersten Abschnitt und der Steckverbinder einen zweiten Abschnitt aufweist, in dem das Leiterpaar über Steckkontakte verfügt, sowie einen Zwischenabschnitt. Die Leiter haben im ersten Abschnitt einen kleineren gegenseitigen Abstand, der sich im Zwischenabschnitt in Richtung des zweiten größeren Abschnitts vergrößert. Die Leiter sind im ersten und/oder zweiten Abschnitt von einem gemeinsamen Schirm gegen äußere elektromagnetische Einflüsse und zumindest im Zwischenabschnitt gegeneinander abgeschirmt. Eine Stützhülse ist auf den Leiterpaarschirm aufgesetzt und durch eine Crimphülse fixiert.

Diese Lösungen erweisen sich in der Praxis jedoch als dahingehend nachteilig, weil diese Lösungen gerade in einem robusteren Umfeld nicht zuverlässig sind. So können sich bei äußeren Einwirkungen, beispielsweise Erschütterungen, die Leiter ungewollt annähern. Die hierdurch verursachten Impedanzänderungen beeinflussen die Datenübertragung negativ. Zudem sind die Lösungen konstruktiv recht komplex, was nicht nur die Herstellungskosten erhöht, sondern auch vergleichsweise große Toleranzen in der Kabelführung erzeugt, die zu ungewünschten Impedanzschwankungen führen.

Aufgabe der Erfindung ist es, einen Datenkabel-Steckverbinder für eine Datenübertragung mit einer Zugentlastung für die Kabeleinführung bereitzustellen, der einfacher herstellbar ist und gerade auch in einem technisch robusten Umfeld, wie Steckverbindungen in Kraftfahrzeugen, zuverlässig Schwankungen in der Impedanz vermeidet.

Diese Aufgabe wird durch einen Datenkabel-Steckverbinder mit den Merkmalen des Anspruchs 1 und durch eine Verwendung eines Datenkabel-Steckverbinders mit den Merkmalen des Anspruchs 13 gelöst. Dazu ist insbesondere vorgesehen, dass in der Kabelanschlussseite des Datenkabel-Steckverbindens ein Impedanz-Transmitter aus elektrisch leitendem Material angeordnet ist, in dem die erste Anschlussführung und die zweite Anschlussführung und an dem ggf. auch der Schirmungsanschluss ausgebildet sind, wobei zwischen der ersten Anschlussführung und der zweiten Anschlussführung zumindest abschnittsweise elektrisch leitendes Material ausgebildet ist. Der Impedanz-Transmitter ist erfindungsgemäß angrenzend an den Kontaktträger ausgebildet, wobei dem Kontaktträger zugewandte Öffnungen der ersten und der zweiten Anschlussführung in die Durchgangsöffnungen des Kontaktträgers münden.

Es hat sich herausgestellt, dass durch eine derartige Ausbildung und Anordnung eines Impedanz-Transmitters in dem Datenkabel-Steckverbinder der Leitungswellenwiderstand (auch als Impedanz oder Kabelimpedanz bezeichnet) durch den Stecker nur minimal beeinflusst wird. Dies ist bei Datenkabel-Steckverbindungen für Datenkabel von hoher Bedeutung, insbesondere bei der Übertragung hoher Datenraten, wie beispielsweise im Bereich von 1 GBit/s (Gigabit pro Sekunde), für die der erfindungsgemäße Datenkabel-Steckverbinder besonders bevorzugt verwendet werden kann. Änderungen in dem Leitungswellenwiderstand treten beim Übergang von einem ersten Datenkabel auf den Datenkabel-Steckverbinder, innerhalb des Datenkabel-Steckverbinders und bei dem Übergang von der Datenkabel-Steckverbindung auf ein zweites Datenkabel auf. Störstellen bei der Datenübertragung, beziehungsweise Änderungen im Leitungswellenwiderstand, führen dazu, dass das Datensignal (sich in dem Datenkabel ausbreitende elektromagnetische Welle) an der Störstelle teilweise transmittiert wird (d.h. sich in dem Datenkabel in der bisherigen Ausbreitungsrichtung weiter ausbreitet) als auch teilweise reflektiert wird (d.h. sich in dem Datenkabel entgegen der bisherigen Ausbreitungsrichtung ausbreitet). Dies führt zu Störungen in der Signalübertragung und sollte vermieden werden. Eine möglichst geringe Änderung des Wellenwiderstands in der Datensteckverbindung weist folglich auf eine geringe Anzahl an Störstellen hin. Außerdem ist die vorgeschlagene Lösung sehr robust und kann so auch im Fahrzeugreich, in dem es während des Betriebs der Fahrzeuge zu großen mechanischen Belastungen aufgrund von Erschütterungen kommt, zuverlässig verwendet werden.

In der Regel ist es auch so, dass der Abstand der isolierten Leiter in dem Datenkabel und der Abstand der Kontakte in dem Kontaktträger nicht gleich sind, bspw. aus Gründen der Haptik, aufgrund unterschiedlicher Durchmesser der isolierten Leiter in den Kabeln auf den verschiedenen Seiten der Datenkabel-Steckverbinders oder aufgrund mechanischer Vorgaben zum Erreichen einer hohen Zahl von zuverlässig realisierbaren Steckvorgängen (mechanische Stabilität der Kontakte). Der unterschiedliche Abstand der ersten und zweiten isolierten Leiter führt zu einer erheblichen Änderung des Wellenwiderstands. Es hat sich herausgestellt, dass die Änderung des Wellenwiderstands während einer Abstandsänderungen dadurch minimiert werden kann, dass zwischen der ersten und der zweiten Anschlussführung zur Führung des ersten und des zweiten isolierten Leiters elektrisch leitendes Material angeordnet ist, so dass in diesem Bereich jeder der Leiter eine eigene Leiterschirmung aufweist.

Entsprechend sieht eine besonders bevorzugte Ausführungsform der Erfindung vor, dass sich der Abstand der ersten Anschlussführung und der zweiten Anschlussführung bezogen auf die Axialrichtung des Datenkabel-Steckverbinders (die insbesondere auch der Mittelachse des Datenkabel-Steckverbinders entsprechen kann) ändert, insbesondere vergrößert. Dies ist insbesondere auch dann der Fall, wenn der Datenkabel-Steckverbinder mehr als zwei isolierte Leiter, respektive Anschlussführungen, aufweist. Dies kann erfindungsgemäß für mehrere oder alle der Anschlussführungen gelten.

Eine Änderung des Abstands der Anschlussführungen kann insbesondere bei Anschlussführungen bedeuten, dass sich der Abstand beispielsweise der Mittellinien oder anderer, jeweils gleicher, charakteristischer Merkmale der Anschlussführungen in der Ebene ändert, die durch die Axialrichtung des Steckverbinders und durch die Mittellinien (bspw. anderen charakteristischen Merkmale) der beiden Anschlussführungen verläuft. In einer allgemeineren Definition lässt sich eine Änderung des Abstands der Anschlussführungen dadurch beschreiben, dass sich der Abstand der Anschlussführungen zwischen einer definierten Achse des Datenkabel-Steckverbinders in Axialrichtung, bei einem runden oder ovalen Datenkabel-Steckverbinder insbesondere eine Mittelachse des Datenkabel-Steckverbinders, und der Anschlussführung ändert. Da die Anschlussführungen eine eigene Leiterschirmung des ersten und zweiten isolierten Leiters bilden, verbessert sich unter anderem die elektromagnetische Verträglichkeit, und die Störanfälligkeit der Signalübertragung wird minimiert.

Erfindungsgemäß kann entsprechend einer bevorzugten Ausführung vorgesehen sein, dass die Länge der Anschlussführungen in dem Datenkabel-Steckverbinder gleich ist. Hierdurch werden Laufzeitunterschiede der Signale in der ersten, der zweiten und gegebenenfalls jeder weiteren Anschlussführung vermieden. Ein solcher Laufzeitunterschied kann zu Störungen bei der Datenübertragung und Änderungen in dem Leitungswellenwiderstand (Impedanz) führen. Um das Datenübertragungsverhalten eines Datenkabel-Steckverbinders zusätzlich zu begünstigen, kann insbesondere vorgesehen sein, dass eine Kabeleinführung in den Datenkabel-Steckverbinder, ein Steckkontakt-Anschlussbild zum Aufstecken eines Steckers und die Anschlussführungen jeweils symmetrisch um eine ausgewählte Axialachse des Datenkabel-Steckverbinders, beispielsweise dessen Mittelachse, angeordnet sind. Da auch alle um die Leiterführungen angeordneten Bauteilkomponenten, insbesondere aufgrund ihrer Schirmwirkung, das Übertragungsverhalten beeinflussen, kann es besonders vorteilhaft sein, wenn der Datenkabel-Steckverbinder und die ihn bestimmenden Bauteilkomponenten symmetrisch oder zumindest weitestgehend symmetrisch um eine ausgewählte Symmetrieachse (wie die Axialachse des Datenkabel-Steckverbinders, beispielsweise die Mittelachse) angeordnet und gestaltet sind.

Eine weitere bevorzugte Ausführungsform des Datenkabel-Steckverbinders kann dadurch gekennzeichnet sein, dass die erste und die zweite Anschlussführung (sowie ggf. weitere Anschlussführungen) als nicht parallel verlaufende Durchgänge in dem Impedanz-Transmitter ausgebildet sind. Vorzugsweise entspricht die Anzahl der Anschlussführungen respektive Durchgänge gerade der Anzahl der isolierten Leiter, die für die Datenübertragung genutzt werden. Die Durchgänge können hierbei insbesondere in Form von (geradlinig verlaufenden) Durchgangsbohrungen ausgestaltet sein, wobei auch die Oberflächengüte der Durchgangsbohrungen das Impedanzverhalten im Bereich der Durchgangsbohrungen mitbestimmen kann.

Bevorzugt verlaufen die Durchgänge der verschiedenen Anschlussführungen symmetrisch in einem Winkel zu einer Längsachse (Axialachse) des Steckerkörpers. Der Winkel ist hierbei bevorzugt identisch, gemessen von der Mittelachse des Datenkabel-Steckverbinders. Bevorzugt werden der Winkel der Durchgänge zur Mittelachse und die Länge der Durchgänge so bestimmt, dass die geringste Beabstandung der mindestens zwei isolierten Leiter vor dem Eintritt in die Durchgänge minimal und nach dem Austritt aus den Durchgängen maximal ist.

Eine bevorzugte Ausführungsform sieht dabei vor, dass ein Innendurchmesser der Durchgänge größer ausgebildet ist als ein Außendurchmesser der isolierten Leiter des Datenkabels, so dass zwischen einem in dem Durchgang geführten isolierten Leiter des Datenkabels und dem Impedanz-Transmitter ein Zwischenraum ausgebildet wird, der mit einem nicht elektrisch leitenden Material gefüllt ist, das entsprechend eine andere Dielektrizitätskonstante ε_{R} aufweist als der Impedanz-Transmitter.

Das Material im Zwischenraum zwischen dem im Durchgang geführten isolierten Leiter und der Innenwand des Durchgangs kann insbesondere Luft oder ein anderes Material sein, das eine geringere Dielektrizitätskonstante ε_{R} aufweist als das elektrisch leitende Material des Impedanz-Transmitters, d.h. als Dielektrikum wirkt. Das elektrisch leitende Material des Impedanz-Transmitters kann beispielsweise eine vernickelte Kupfer- oder Messinglegierung sein oder einen dieser Werkstoffe aufweisen.

Durch die Größe des Zwischenraums, die Dielektrizitätskonstante ε_{R} des den Zwischenraum ausfüllenden Materials und/oder den Abstand der Anschlussführungen, kann die Impedanz des Datenkabel-Steckverbinders verändert werden. Da nicht nur die Länge der Durchgänge, sondern auch die Beabstandung der Innenwand der Durchgänge zu dem isolierten ersten und zweiten Leiter das Übertragungsverhalten beeinflussen, weisen die Durchgänge vorteilhaft einen gleichbleibenden Durchmesser über ihre Länge auf.

Die steckeranschlussseitigen Öffnungen des Impedanz-Transmitters, beziehungsweise der Anschlussführungen, münden in die Durchgangsöffnung des Kontaktträgers. Der Kontaktträger kann hierbei den Impedanz-Transmitter teilweise umhüllen, bspw. durch vorstehende Randbereiche.

Nach einer weiteren bevorzugten Ausführungsform der Erfindung kann der Kontaktträger aus einem Kunststoffmaterial mit einer definierten Dielektrizitätskonstante ε_{R} aufgebaut sein. Das Kunststoffmaterial kann in der Praxis eine Dielektrizitätskonstante ε_{R} von ungefähr 3 aufweisen und kann zudem insbesondere in einem Bereich zwischen ε_{R} ungefähr 2 oder 2,5 und ungefähr 4 liegen. Mit den in der Praxis gegebenen Geometrien und Datenkabeln sowie mit den zuvor beschriebenen vorteilhaften Ausführungsformen und Werkstoffen lässt sich häufig eine Impedanz im Bereich des Kontaktträgers einstellen, die der Impedanz des Datenkabels, bspw. 100 Ohm, entspricht. Die Werte für die Dielektrizitätskonstante ε_{R} des Kunststoffträgers stellen zwar typische Wertebereiche dar, die Erfindung ist darauf jedoch nicht beschränkt.

Vergleichbar mit dem Zwischenraum der isolierten Leiter zur Innenwand der Durchgänge des Impedanz-Transmitters können grundsätzlich auch die Leiter und Kontakte zur Innenwand der Durchgangsöffnungen des Kunststoffträgers beabstandet sein. Auch an dieser Stelle kann es vorteilhaft sein, diesen Zwischenraum mit einem Material, beispielsweise Luft, zu füllen.

Ferner kann in einer bevorzugten Ausführungsform der erste und/oder zweite Kontakt in dem Kontaktträger in Axialrichtung des Datenkabel-Steckverbinders an einer ersten Position einen Versatz im Außendurchmesser aufweisen, wenn entsprechende Kontakte des Datenkabel-Steckverbinders an den Datenkabeln bspw. durch Verkrimpen oder Verlöten festgelegt werden. Dann kann der Kontaktträger in Axialrichtung des Datenkabel-Steckverbinders an einer zweiten Position einen Versatz im Außendurchmesser aufweisen, um diese Kontakte in den Kontaktträger aufzunehmen. Da das Datenübertragungsverhalten, wie bereits zuvor beschrieben, unter anderem durch die Impedanz in dem Datenteckverbinder beeinflusst wird (wobei die Schirmung unter anderem durch die Summe der Materialien bestimmt wird, die sich zwischen der außerhalb des Steckverbinders liegenden Umgebung und dem Leiter und/oder Kontakt befinden), ist es vorteilhaft, wenn sich der Abstand zwischen der außerhalb des Steckverbinders liegenden Umgebung und dem Leiter und/oder Kontakt voneinander abhängig verändert. Daher ist es vorteilhaft, wenn die zweite Position in Axialrichtung an der derselben Position wie die erste Position einen Versatz aufweist. Ein solcher Versatz kann einen Leiter und/oder Kontakt auch fixieren und/oder sichern.

In einer bevorzugten Ausführungsform, die die Übertragung besonders hoher Datenraten erlaubt, sieht die Erfindung vor, dass die Impedanz im Datenkabel-Steckverbinder dem Impedanzwert des Datenkabels entspricht. Gemäß einer besonders bevorzugten Ausführung ist es vorgesehen, dass die Impedanz in dem Datenkabel-Steckverbinder durch Variation mindestens eines der Parameter
- Verlauf der Durchgänge
- Größe des Zwischenraums
- Dielektrizitätskonstante ε_{R} des den Zwischenraum füllenden Materials
- Dielektrizitätskonstante ε_{R} des Kontaktträgers
- Erste Position des Versatzes im Außendurchmesser des Kontakts
- Zweite Position des Versatzes im Außendurchmesser des Kontaktträgers derart eingestellt wird, dass die Impedanz in dem Datenkabel-Steckverbinder einem vorgegebenen Impedanzwert des Datenkabels entspricht.

Die Variation des Verlaufs der Durchgänge in dem Impedanz-Transmitter schließt insbesondere eine Variation des Winkels zwischen Mittelachsen der Anschlussführungen und/oder eine Variation der Länge des Impedanz-Transmitters in Axialrichtung des Datenkabel-Steckverbinders ein. Zusätzlich schließt die Variation des Verlaufs der Durchgänge auch sämtliche bereits zuvor genannten Variationsmöglichkeiten, die eine Beeinflussung der Impedanz hervorrufen, wie beispielsweise die Veränderung der Oberflächengüte, mit ein.

Ein Optimum der Parameter kann gemäß einer möglichen Ausführung durch eine Berechnung der Impedanz in einem physikalischen Modell des Datenkabel-Steckverbinders ermittelt werden. Da sich die Parameter teilweise gegenseitig beeinflussen, können mehrere optimale Parameterwerte existieren, wobei die Impedanz in dem Datenkabel-Steckverbinder einem vorgegebenen Impedanzwert des Datenkabels entspricht. Die Bestimmung der Parameter in einem physikalischen Modell ist jedoch vergleichsweise aufwendig, weil die theoretische Berechnung der Impedanz eine genaue Berücksichtigung der eingesetzten Materialien und geometrischen Verhältnisse notwendig macht.

Daher besteht eine alternative Möglichkeit der Optimierung der Parameter darin, eine Messung der Impedanz in dem Impedanz-Transmitter, insbesondere mittels einer Zeitbereichsreflektometrie-Messgeräten, durchzuführen. Bei der Zeitbereichsreflektometrie (Time Domain Reflectometrie - TDR) werden Lauflängen und Reflexionscharakteristika von elektromagnetischen Wellen und Signalen in Kabeln bzw. Signalleitern bestimmt. Ein solches oder ähnliche Verfahren sind dem Fachmann bekannt. Sie beruhen darauf, dass ein Impulsgenerator eine Folge sehr kurzer Signale erzeugt, die in das Kabel eingespeist werden. In einem Messgerät werden die Signalamplituden und die Laufzeit der Signale dem eingespeisten Signal gegenübergestellt. Durch die Gegenüberstellung lassen sich Störquellen orten. Folglich werden die Störquellen insbesondere dadurch erkannt, dass die Impedanz an der Störquelle abweicht, insbesondere ausschlägt.

Entsprechend können zur Anpassung der Impedanz des Datenkabel-Steckverbinders an den Impedanzwert des Datenkabels das Datenkabel an den Datenkabel-Steckverbinder angeschlossen und Störquellen ortsaufgelöst ermittelt werden. Durch Variation der Parameter können die Störquellen dann beseitigt oder zumindest soweit reduziert werden, dass die Störungen einer zuverlässigen Datenübertragung nicht im Wege stehen.

Es hat sich herausgestellt, dass der vorgeschlagene Datenkabel-Steckverbinder in der Grundkonfiguration bei üblichen Datenkabeln, die häufig eine Impedanz von etwa 100 Ohm aufweisen, einen bereits ähnlichen Impedanzwert aufweist. Ein ähnlicher Impedanzwert bedeutet hier, dass die Impedanz über die Länge des Datenkabel-Steckverbinders nicht mehr als 5% von einer durchschnittlichen Impedanz abweicht und die Impedanzen über die Länge des Datenkabel-Steckverbinders somit vorzugsweise im Bereich von 100 ± 5 Ω liegen. Gleiches gilt folglich auch für die Impedanz im Bereich des Impedanz-Transmitters.

Es hat sich entsprechend als eine bevorzugte Ausführungsform erwiesen, empirisch ermittelte Parameter zu verwenden, bei denen in Messungen mittels Zeitbereichsreflektometrie-Messgeräten keine Impedanzänderungen oder Störungen in dem Datenkabel-Steckverbinder angezeigt werden. Für die Messungen kann der Datenkabel-Steckverbinder mit einem Datenkabel verbundenen werden. Unter Störungen werden dabei insbesondere Impedanzänderungen in einer Größenordnung verstanden, die eine Datenübertragung mit der gewünschten Datenrate stören.

Die jeweilige Größenordnung ist für den Fachmann gegebenenfalls empirisch ermittelbar. Eine Optimierung kann also insbesondere dadurch erfolgen, dass die gemessene Impedanz über die Länge des Datenkabel-Steckverbinders nahezu identisch mit der Impedanz des außerhalb des Steckverbinders liegenden Kabels ist, oder mit anderen Worten innerhalb des Datenkabel-Steckverbinders keine die Datenübertragung beeinträchtigenden Störstellen ermittelt werden.

Ferner weist eine besonders bevorzugte Ausführungsform des Datenkabel-Steckverbinders einen Schirmungsanschluss auf, wobei der Schirmungsanschluss für die Leitungsschirmung vorzugsweise an dem Impedanz-Transmitter ausgebildet ist und der Impedanz-Transmitter elektrisch leitend mit der Steckerschirmung in Verbindung steht. Dies hat vor allem konstruktive Vorteile, da der Impedanz-Transmitter kabelanschlussseitig vorzugsweise zumindest bereichsweise flächig ausgestaltet ist, sodass ohne weiteren konstruktiven Aufwand relativ einfach eine elektrisch leitende Verbindung zwischen der Leitungsschirmung und dem Impedanz-Transmitter hergestellt werden kann. Erfindungsgemäß besonders bevorzugt umgibt der Schirmungsanschluss die erste und zweite Anschlussführung vollständig, d.h. bildet einen um 360° umlaufenden Kreisring auf dem Impedanz-Transmitter um die (bzw. alle) Anschlussführungen aus. Da die elektrisch isolierten Leiter nach dem Austritt aus dem Datenkabel direkt in den Impedanz-Transmitter bzw. dessen Durchgänge eintreten, kann zudem durch den Anschluss der Leiterschirmung an den Impedanz-Transmitter eine Unterbrechung der Schirmung vermieden werden.

Erfindungsgemäß weist der Steckerkörper auf der Kabelanschlussseite eine Kabeleinführung mit einer Zugentlastungsschelle und einer Spannmutter auf, wobei die Zugentlastungsschelle durch Aufschrauben der Spannmutter gegen den Impedanz-Transmitter andrückbar ist und die Kabeleinführung gegenüberliegend zu den Anschlussführungen in dem Impedanz-Transmitter angeordnet ist. Hierdurch kann insbesondere eine Fixierung oder ein Anpressen der Leiterschirmung an den Impedanz-Transmitter erfolgen, wobei die Fixierung oder das Anpressen der Leiterschirmung insbesondere zwischen einer zur Steckeranschlussseite gerichteten Fläche der Zugentlastungsschelle und einer zur Kabelanschlussseite gerichteten Fläche des Impedanz-Transmitters erfolgt. Das Aufschrauben der Spannmutter ermöglicht zudem einen modularen und stabilen Aufbau des Datenkabel-Steckverbinders. Zudem erlaubt die beschriebene Ausführung ein geradliniges Einführen der isolierten Leiter des Datenkabels in die Öffnungen der als Durchgänge in dem Impedanz-Transmitter ausgebildeten Anschlussführungen. Hierdurch werden Impedanzänderungen und damit Störstellen in dem Datenkabel-Steckverbinder vermieden oder reduziert.

Gemäß einer besonders bevorzugten Ausführung der Erfindung können die Anschlussführungen in eine gemeinsame Ausnehmung des Impedanz-Transmitters münden. Eine solche Ausnehmung gibt genug Raum für eine knickfreie Führung der isolierten Leiter aus dem Datenkabel in die Anschlussführungen. Vorzugweise ist der Schirmungsanschluss um diese Ausnehmung ausgebildet. In Kombination der vorbeschriebenen Merkmale ermöglicht dies, dass die Leistungsschirmung des Datenkabels zwischen der Zugentlastungsschelle und dem Impedanz-Transmitter angedrückt und elektrisch leitend sowohl zu dem Impedanz-Transmitter als auch zu der vorzugsweise auch metallischen Zugentlastungsschelle gehalten ist. Dies erleichtert eine vollständig und zuverlässige Abschirmung der Leiter der Datenkabel in der Kabeleinführung bei gleichzeitig ausreichender Flexibilität zur Vermeidung von Knicken in dem und/oder Beschädigungen an dem elektrischen Leiter. Auch hierdurch werden Impedanzänderungen und damit Störungen bei dem Eintritt des Datenkabels in den Datenkabel-Steckverbinder vermieden.

In einer besonders bevorzugten Ausgestaltung der Erfindung ist an die Kabelanschlussseite des Datenkabel-Steckverbinders das Datenkabel eines Kraftfahrzeugs angeschlossen, wobei das Datenkabel mit dem Fahrzeugdatennetz des Kraftfahrzeugs verbunden oder verbindbar ist. Des Weiteren kann ein erfindungsgemäßer Datenkabel-Steckverbinder zur Verbindung von Zugfahrzeug und Anhänger oder Kraftfahrzeug mit einer externen kabelgebundenen Datenkommunikation verwendet werden. Eine solche externe kabelgebundene Datenkommunikation umfasst insbesondere den Anschluss an extern an die Kraftfahrzeuge anschließbare Geräte oder Funktionen.

Da die Datenkabel-Steckverbinder hierbei insbesondere auch Umgebungseinflüssen beispielsweise Feuchtigkeit ausgesetzt sind, kann eine Abdichtung des Datenkabel-Steckverbinders bspw. an dem Übergang von dem Datenkabel zum Steckerkörper vorteilhaft sein.

Ferner kann der erfindungsgemäße Datenkabel-Steckverbinder zum Verbinden von zwei Datenkabeln mit isolierten Leitern unterschiedlicher Durchmesser verwendet werden. Ein solche Verwendung ist insbesondere im Automotivebereich vorteilhaft, da die Kabel in einem Datennetzwerk eines Kraftfahrzeugs häufig Leiter mit einem kleinen Querschnitt von etwa 0,13 bis 0,15 mm² aufweisen. Diese werden innerhalb des Fahrzeugs für eine schnelle Datenübertragung, bspw. bis hin zu einem GBit/s, verwendet. Diese kleinen Querschnitte können die gewünschte Impedanz der Datenkabel, bspw. etwa 100 Ohm, aber nur über vergleichbar kurze Kabellängen von bis zu etwa 8 bis 10 Metern sicherstellen. Anschlüsse an Anhänger oder externe Geräte lassen sich so nicht erreichen. Um eine GBit-Datenübertragung über Kabellängen bis 40 Meter zu erreichen, muss ein Übergang auf Datenkabel mit größeren Querschnitten, insbesondere im Bereich von 0,35 bis 0,75 mm², erreicht werden. Die Stecker solcher Datenkabel erfordern einen größeren Kontaktabstand, so dass auch entsprechende Datenkabel-Steckverbinder zur Verfügung gestellt werden müssen. Solche Datenkabel-Steckverbinder können bevorzugt einen Stiftkontaktabstand im Bereich von 5 ± 1 mm aufweisen. Hierfür eignet sich der erfindungsgemäß vorgeschlagene Datenkabel-Steckverbinder besonders gut, weil der vorgeschlagene Impedanz-Transmitter eine Anschlussführung vorschlägt, die ein Ändern des Abstands der Datenleitungen ohne Impedanzänderung ermöglicht.

Weitere Merkmale, Vorteile und Anwendungsmöglichkeiten der vorliegenden Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in beschriebenen bzw. dargestellten Ausführungsbeispielen oder in den Ansprüchen.

Es zeigen:
- Fig. 1: eine Schnittdarstellung eines erfindungsgemäßen Datenkabel-Steckverbinders gemäß einer Ausführungsform der Erfindung;
- Fig. 2: den Datenkabel-Steckverbinder gemäß Fig. 1 in einer ungeschnittenen Seitenansicht;
- Fig. 3: eine explosionsartige perspektivische Darstellung des Datenkabel-Steckverbinders gemäß Fig.1;
- Fig. 4: eine Schnittdarstellung des Datenkabel-Steckverbinders gemäß Fig. 3;
- Fig. 5A: eine perspektivische dreidimensionale Darstellung eines erfindungsgemäßen Impedanz-Transmitters des Datenkabel-Steckverbinders gemäß einer Ausführungsform;
- Fig. 5B: den Impedanz-Transmitter gemäß Fig. 5A in einer Schnittdarstellung;
- Fig. 5C: eine geschnittene Seitenansicht des Impedanz-Transmitters gemäß Fig. 5A;
- Fig. 5D: eine steckeranschlussseitige Vorderansicht des Impedanz-Transmitters gemäß Fig. 5A.

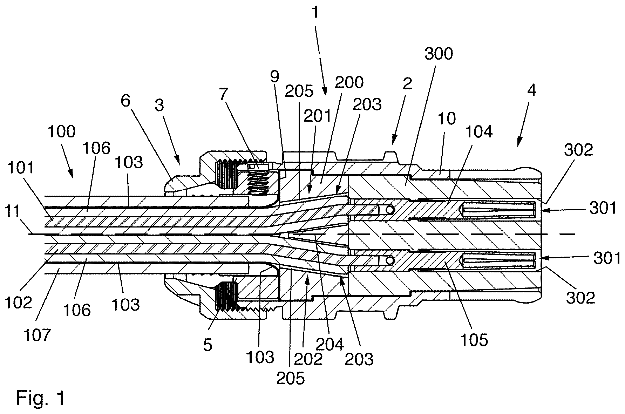

Der in Figur 1 dargestellte Datenkabel-Steckverbinder 1 für eine Datenübertragung, insbesondere eine hochfrequente Datenübertragung im Automobil- und Nutzfahrzeugbereich, weist einen Steckerkörper 2 mit einer Kabelanschlussseite 3 und einer Steckeranschlussseite 4 auf. An der Kabelanschlussseite 3 führt ein Datenkabel 100 in den Datenkabel-Steckverbinder 1. Das Datenkabel 100 in Figur 1 weist einen ersten Leiter 101 und einen zweiten Leiter 102 auf, die jeweils von einer Leiterisolierung 106 umgeben sind. Die isolierten ersten und zweiten Leiter 101 und 102 liegen wiederrum in einer Leiterschirmung 103, die von einem Kabelmantel 107 ummantelt ist.

Auf der Kabelanschlussseite 3 tritt das Datenkabel 100 zunächst durch bspw. durch eine Spannmutter 6 in den Datenkabel-Steckverbinder 1 ein. Die Spannmutter 6 ist in Figur 1 gegen eine Zugentlastungsschelle 5 verschraubt angeordnet. Anstelle der hier dargestellten Zugentlastung kann der Fachmann eine Zugentlastung erfindungsgemäß auch anders realisieren.

Das Datenkabel 100 ist durch Zugentlastungsschelle 5 durchgeführt, wobei die Zugentlastungsschelle 5 in Steckeranschlussrichtung die Leitungsschirmung 103 gegen einen Impedanz-Transmitters 200 drückt. Die Leitungsschirmung 103 ist somit direkt an den elektrisch leitenden Impedanz-Transmitter 200 angeschlossen. Auch die Zugentlassungsschelle 5 kann ein elektrisch leitendes Material aufweisen, sodass ein Schirmungsanschluss 9 durch eine Fläche des Impedanz-Transmitters 200 und gegebenenfalls auch durch die Zugentlastungschelle 5 gebildet wird.

Eine bevorzugte Ausführungsform des Datenkabel-Steckverbinders 1 kann eine Dichtung oder mehrere Dichtungen (hier nicht dargestellt) zwischen dem Steckerkörper 2 und dem Datenkabel 100 und/oder zwischen der Spannmutter 6 und dem Datenkabel 100 aufweisen, insbesondere wenn der Datenkabel-Steckverbinder 1 Feuchtigkeit und/oder Schutz ausgesetzt sein kann, bspw. im Außenbereich eines Kraftfahrzeugs.

Die Zugentlastungschelle 5 kann darüber hinaus eine erste Verdrehsicherung 7 aufweisen, die in Figur 1 eine Madenschraube umfasst. Im zusammengebauten Zustand des Datenkabel-Steckverbinders 1 kann die Madenschraube in eine Ausbuchtung eines kabelanschlussseitig ausgebildeten Gewindebereichs des Stecckörpers 2 eingreifen, sodass eine relative Verdrehung des Datenkabels 100 zum Datenkabel-Steckverbinder 1 verhindert wird.

Die isolierten ersten und zweiten Leiter 101 und 102 des Datenkabels 100 werden nach Austritt aus dem Kabelmantel 107 in den erfindungsgemäß vorgeschlagenen Impedanz-Transmitter 200 eingeführt. Der Impedanz-Transmitter 200 liegt kabelanschlussseitig an der Zugentlastungsschelle 5 an, so dass die Leitungsschirmung 103 zwischen der Zugentlastungsschelle 5 und dem Impedanz-Transmitter 200 elektrisch leitend festgeklemmt ist. Es wird der Klarheit halber darauf hingewiesen, dass der Datenkabel-Steckverbinder erfindungsgemäß kein Datenkabel 100 aufweisen muss; das Datenkabel 100 ist also nicht zwangsläufig Teil der Erfindung. Der Datenkabel-Steckverbinder 1 ist in diesem Fall zur Aufnahme eines entsprechenden üblichen Datenkabels 100 ausgebildet. Gemäß einer Ausführungsform kann der Datenkabel-Steckverbinder 1 aber auch bereits mit dem ausgenommenen und zur Veranschaulichung dargestellten Datenkabel 100 ausgestattet sind.

Steckeranschlussseitig liegt der Impedanz-Transmitter 200 an einem Kontaktträger 300 an. Zwischen der kabelanschlussseitigen und der steckeranschlussseitigen Kontaktfläche weist der Impedanz-Transmitter 200 einen Absatz auf. Dieser Absatz liegt an einem Versatz einer Steckerschirmung 10 an, sodass eine Bewegung des Impedanz-Transmitter 200 in Richtung der Steckeranschlussseite 4 insbesondere durch den Versatz der Steckerschirmung 10 begrenzt ist.

Wie in Figur 1 dargestellt, sind der erste und zweite isolierte Leiter 101 und 102 in eine erste Anschlussführung 201 und eine zweite Anschlussführung 202 geführt. Die Anschlussführungen 201 und 202 sind insbesondere durch Durchgänge 205 in Form von Durchgangsbohrungen ausgebildet. Die Durchgänge 205 sind in einem identischen Winkel zu einer Mittelachse 11 des Datenkabel-Steckverbinders 1 in dem Impedanz-Transmitter 200. Der sich hierdurch bildende Zwischenbereich, d.h. der Bereich zwischen den beiden Durchgängen 205, ist erfindungsgemäß mit einem elektrisch leitenden Material 204 gefüllt, vorzugsweise dem elektrisch leitenden Material 204 des Impedanz-Transmitters 200.

Zusätzlich ist zwischen der Leiterisolierung 106 der elektrischen Leiter 101 und 102 und der Innenwand der Durchgänge 205 ein Zwischenraum 203 ausgebildet. Der Zwischenraum 203 kann mit einem dielektrischen (d.h. nicht elektrisch leitenden) Material, insbesondere mit Luft, gefüllt sein. Bevorzugt weist dieses Material eine von dem Impedanz-Transmitter 200 verschiedene Dielektrizitätskonstante ε_{R} auf, wirkt also als zusätzliches Dielektrikum.

Steckeranschlussseitig führt der erste und zweite Leiter 101 und 102 in den Kontaktträger 300 bzw. in in den Kontaktträger 300 aufgenommene erste und zweite Kontakte 104 und 105. Die Leiterisolierung 106 endet hierbei mit Abschluss des Impedanz-Transmitters 200, d.h. beim Eintritt in den Kontaktträger 300 bzw. die Kontakte 104 und 105.

Der Kontaktträger 300, der bevorzugt aus einem Kunststoffmaterial ausgebildet ist, weist zwei Durchgangsöffnungen 302 auf. In jeder dieser Durchgangsöffnungen 302 ist jeweils einer der Kontakte 104 und 105, d.h. ein erster Kontakt 104 und ein zweiter Kontakt 105, angeordnet. Der erste Leiter 101 sowie der zweite Leiter 102 sind jeweils mit einem solchen ersten und zweiten Kontakt 104 und 105 verbunden, bspw. durch Verkrimpen oder durch Verlöten.

Zwischen der steckeranschlussseitigen Begrenzung des Kontaktträgers 300 und der kabelanschlussseitigen Kontaktfläche mit dem Impedanz-Transmitter 200 weist der Kontaktträger 300 in seinem Außenumfang einen Versatz auf. Dieser Versatz liegt an einem Versatz der Steckerschirmung 10 an, sodass eine Bewegung des Kontaktträgers 300 in Richtung der Steckeranschlussseite 4 insbesondere durch den Absatz der Steckerschirmung 10 begrenzt ist. Durch den Absatz kann insbesondere ein ungewolltes steckeranschlussseitiges Austreten des Kontaktträgers aus dem Steckerkörper 2 verhindert werden. Außerdem entspricht die Position des Versatzes von Kontaktträger 300 und Steckerschirmung 10 einem Versatz im Außenumfang der Kontakte 104 und 105. Dieser Versatz hilft, die Impedanz des Datenkabel-Steckverbinders 1 entlang seiner Mittelachse 11 konstant zu halten und damit relevante Störstellen bei der Datenübertragung zu vermeiden.

Steckeranschlussseitig weist der Kontaktträger 300 je eine Kontaktöffnung 301 für je eine Durchgangsöffnung 302 auf, zum Einführen von Kontakten eines (nicht dargestellten) Steckers, bspw. Stiftkontakten des Steckers, die in Buchsenkontakte der Kontakte 104 und 105 eingesteckt werden. Die Erfindung ist auf eine derartige Ausbildung der Kontakte aber nicht beschränkt.

Der Datenkabel-Steckverbinder 1 ist achsensymmetrisch ausgestaltet, wobei die Symmetrieachse durch die Mittelachse 11 gebildet wird.

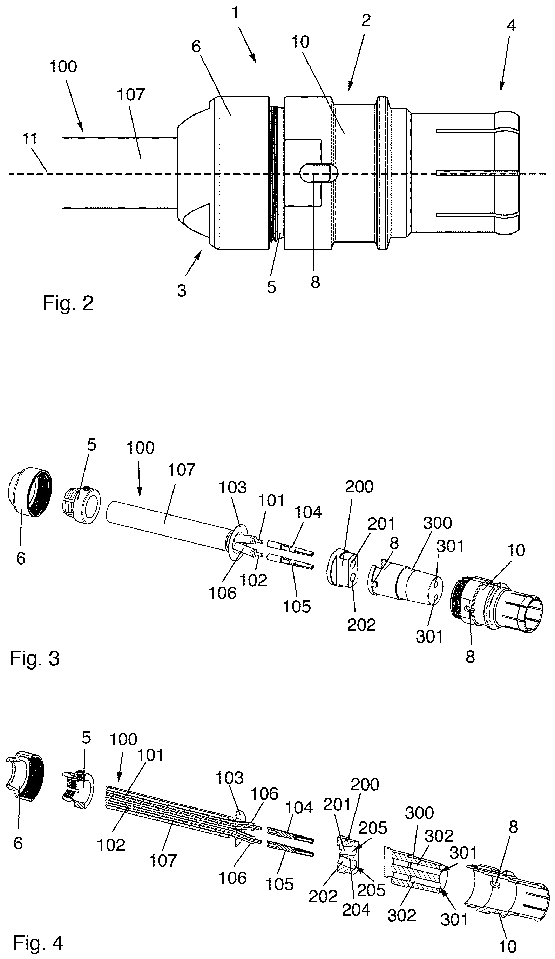

In Figur 2 wird der in Figur 1 dargestellte Datenkabel- Steckverbinder 1 ungeschnitten dargestellt. Neben dem Steckerkörper 2, der Kabelanschlussseite 3, der Steckeranschlussseite 4 und dem Datenkabel 100 ist insbesondere eine zweite Verdrehsicherung 8 dargestellt. Diese Verdrehsicherung 8 weist einen Fortsatz auf, insbesondere einen Nippel, der an dem Kontaktträger 300 ausgebildet ist, sowie eine dazu korrespondierende Ausnehmung in der Steckerschirmung 10 des Steckerkörpers 2 auf. Hierdurch wird verhindert, dass sich der Kontaktträger 300 in dem Steckerkörper 2 verdreht.

Figur 3 wird eine Explosionsansicht einer erfindungsgemäßen Ausführungsform des Datenkabel- Steckverbinders 1 gezeigt. Neben den bereits zuvor beschriebenen Merkmalen zeigt diese Darstellung, dass der Impedanz-Transmitter 200 im zusammengebauten Zustand zumindest teilweise in dem Kontaktträger 300 liegt, indem vorstehende Ränder des Kontaktträgers 300 abgeflachte Bereiche des Impedanz-Transmitters 200 aufnehmen. Da der Kontaktträger 300 durch die zweite Verdrehsicherung 8 verdrehsicher gelagert ist, ist auch der Impedanz-Transmitter 200 im zusammengebauten Zustand verdrehsicher gelagert.

In der Figur 3 ist die Leiterschirmung 103 des Datenkabels 100 flächig (komplett geschlossen) dargestellt. Da die Leiterschirmung 103 jedoch bevorzugt aus einem Metall-Geflecht, bspw. einem Aluminium-Geflecht, oder einer Aluminium-Folie aufgebaut ist, dient die Darstellung der Leiterschirmung 103 an dieser Stelle lediglich der Veranschaulichung und muss nicht zwingend flächig ausgebildet sein. Insbesondere können dort einzelne Drähte des Geflechts ausgebildet sein. Vorzugsweise ist liegt das Drahtgeflecht auf der gesamten Fläche des Schirmungsanschlusses 9 elektrisch leitend an, d.h. 360° um die Mittelachse des Datenkabel-Steckverbinders 1. Dies ist erfindungsgemäß zur Vermeidung von Störstellen besser als ein Anschluss über einzelne Kontaktpunkte.

Die ersten und zweiten Kontakte 104 und 105, die im zusammengebauten Zustand in den Durchgangsöffnungen 302 des Kontaktträgers angeordnet sind, weisen einen Flügel bzw. eine Rastnasse auf. Wenn die Kontakte 104 und 105 von der Kabelanschlussseite 3 in den Kontaktträger 300 eingeführt werden, werden die Rastnasen durch einen in den Figuren 1 und 4 erkenntlichen Absatz innerhalb der Durchgangsöffnungen 302 zunächst zusammengedrückt. Sobald die Kontakte 104 und 105 vollständig in die Durchgangsöffnungen 302 gedrückt werden, entfalten sich die Rastnasen und sichern somit die Kontakte 104 und 105 im Kontaktträger 300. Beim Verbinden der Leiter 101 und 102 mit den Kontakten 104 und 105 sind die Leiter 101, 102 in die kabelanschlussseitigen Öffnungen der Kontakte 104 und 105 gesteckt und dort festgelegt. Da die Kontakte 104 und 105 in den Durchgangsöffnungen 302 gehalten werden, können hierbei die Kontakte nicht aus dem Kontaktträger 300 gedrückt werden, bspw. beim Aufstecken eines Steckers. Der Versatz in den Durchgangsöffnungen 302, an dem sich die Rastnasen der Kontakte 104 und 105 abstützen, kann insbesondere in der Schnittdarstellung der Figur 4 erkannt werden.

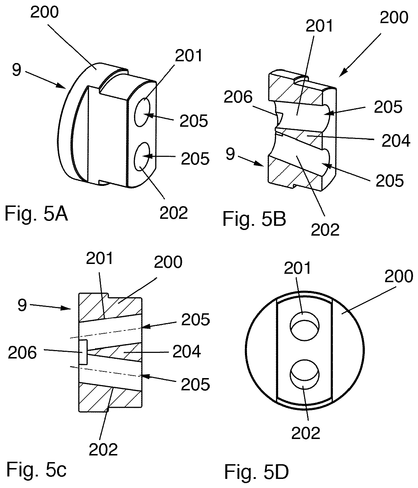

Die Figuren 5A bis 5D zeigen geschnittene und ungeschnittene sowie verschieden orientierte Darstellungen einer möglichen Ausführungsform des Impedanz-Transmitters 200. Insbesondere die Figuren 5B und 5C zeigen die in Form von Durchgangsbohrungen ausgeführten Durchgänge 205, die durch ein elektrisch leitendes Material 204 getrennt voneinander angeordnet sind. Die Durchgänge 205 dienen zur Führung der isolierten Leiter 101 und 102. Insbesondere durch das elektrisch leitende Material 204, das zwischen den isolierten Leitern 101 und 102 angeordnet ist, wenn die Leiter 102 und 102 im zusammengebauten Zustand in den Durchgängen 205 geführt werden, hat jeder der Leiter 101, 102 an dieser Stelle eine eigene Leiterschirmung. Dies ist ein wichtiges Merkmal, um Impedanzänderungen bei größer werdendem Abstand zwischen den Leitern 101 und 102 zu verhindern.

Die Durchgänge 205 des Impedanz-Transmitters 200 sind in den Figuren 5A bis 5D nicht parallel zueinander, sondern in einem Winkel angeordnet. Dadurch sind die Anschlussführungen 201 in Richtung der Steckeranschlussseite 4 weiter voneinander beabstandet als in Richtung der Kabelanschlussseite 3. Fig. 5C zeigt auch, dass die Durchführungen 205 der ersten Anschlussführung 201 und zweiten Anschlussführung 202 kabelanschlussseitig in eine gemeinsame Ausnehmung 206 münden, die von einer den Schirmungsanschluss 9 bildenden Fläche des Impedanz-Transmitters 200 gebildet sind.

Im zusammengebauten Zustand entsteht so ein sehr kompakter und äußerst stabiler Datenkabel-Steckverbinder, der die erfindungsgemäßen Vorteile aufweist.

### Bezugszeichenliste

- 1: Datenkabel-Steckverbinder
- 2: Steckerkörper
- 3: Kabelanschlussseite
- 4: Steckeranschlussseite
- 5: Zugentlastungsschelle
- 6: Spannmutter
- 7: erste Verdrehsicherung
- 8: zweite Verdrehsicherung
- 9: Schirmungsanschluss
- 10: Steckerschirmung
- 11: Mittelachse

- 100: Datenkabel
- 101: erster Leiter
- 102: zweiter Leiter
- 103: Leitungsschirmung
- 104: erste Kontakt
- 105: zweite Kontakt
- 106: Leiterisolierung
- 107: Kabelmantel

- 200: Impedanz-Transmitter
- 201: erste Anschlussführung
- 202: zweite Anschlussführung
- 203: Zwischenraum
- 204: elektrisch leitendes Material
- 205: Durchgang
- 206: Ausnehmung
- 300: Kontaktträger
- 301: Kontaktöffnung
- 302: Durchgangsöffnung

## Patentansprüche

1. Datenkabel-Steckverbinder für eine Datenübertragung mit einem Steckerkörper (2), der eine Kabelanschlussseite (3), eine Steckeranschlussseite (4) und eine Steckerschirmung (10) aufweist, wobei
die Kabelanschlussseite (3) zum Anschließen eines geschirmten Datenkabels (100) mit mindestens einem ersten isolierten Leiter (101) und einem zweiten isolierten Leiter (102) zur Datenübertragung und einer die ersten und zweiten isolierten Leiter (101, 102) umgebenden Leitungsschirmung (103) ausgebildet ist und eine erste Anschlussführung (201) für den ersten isolierten Leiter (101), eine zweite Anschlussführung (202) für den zweiten isolierten Leiter (102) und einen Schirmungsanschluss (9) für die Leitungsschirmung (103) aufweist;
die Steckeranschlussseite (4) einen Kontaktträger (300) mit Kontaktöffnungen (301) zur Aufnahme von mit den ersten und zweiten isolierten Leitern (101, 102) verbindbaren ersten und zweiten Kontakten (104; 105) aufweist, wobei die Kontaktöffnungen (301) als Durchgangsöffnungen (302) in dem Kontaktträger (300) in einer Axialrichtung des Datenkabel-Steckverbinders (1) parallel in einem Kontaktabstand verlaufend angeordnet sind;
in der Kabelanschlussseite (3) des Datenkabel-Steckverbinders (1) ein Impedanz-Transmitter (200) aus elektrisch leitendem Material (204) angeordnet ist, in dem die erste Anschlussführung (201) und die zweite Anschlussführung (202) ausgebildet sind, wobei zwischen der ersten Anschlussführung und der zweiten Anschlussführung zumindest abschnittsweise elektrisch leitendes Material (204) ausgebildet ist und wobei der Impedanz-Transmitter (200) angrenzend an den Kontaktträger (300) ausgebildet ist, wobei dem Kontaktträger (300) zugewandte Öffnungen der ersten und der zweiten Anschlussführung (201; 202) in die Durchgangsöffnungen (302) des Kontaktträgers (300) münden;
**dadurch gekennzeichnet, dass** der Steckerkörper (2) auf der Kabelanschlussseite (3) eine Kabeleinführung mit einer Zugentlastungsschelle (5) und einer Spannmutter (6) aufweist, wobei die Zugentlastungsschelle (5) durch Aufschrauben der Spannmutter (6) gegen den Impedanz-Transmitter (200) andrückbar ist und die Kabeleinführung gegenüberliegend zu den Anschlussführungen (201, 202) in dem Impedanz-Transmitter (200) angeordnet ist, und wobei ein Anpressen der Leiterschirmung (103) zwischen einer zur Steckeranschlussseite (4) gerichteten Fläche der Zugentlastungsschelle (5) und einer zur Kabelanschlussseite gerichteten Fläche (3) des Impedanz-Transmitters (200) erfolgt.

2. Datenkabel-Steckverbinder nach Anspruch 1, **dadurch gekennzeichnet, dass** sich der Abstand der ersten Anschlussführung (201) und der zweiten Anschlussführung (202) bezogen auf die Axialrichtung des Datenkabel-Steckverbinders (1) ändert.

3. Datenkabel-Steckverbinder nach Anspruch 1 oder 2, **dadurch gekennzeichnet, dass** die Länge der Anschlussführungen (201, 202) in dem Datenkabel-Steckverbinder (1) gleich ist.

4. Datenkabel-Steckverbinder nach einem der vorhergehenden Ansprüche, **dadurch gekennzeichnet, dass** die erste und die zweite Anschlussführung (201; 202) als nicht parallel verlaufende Durchgänge (205) in dem Impedanz-Transmitter (200) ausgebildet sind.

5. Datenkabel-Steckverbinder nach Anspruch 4, **dadurch gekennzeichnet, dass** ein Innendurchmesser der Durchgänge (205) größer ausgebildet ist als ein Außendurchmesser der isolierten Leiter (101, 102) des Datenkabels (100), so dass zwischen einem in dem Durchgang (205) geführten isolierten Leiter (101; 102) des Datenkabels (100) und dem Impedanz-Transmitter (200) ein Zwischenraum (203) ausgebildet wird, der mit einem nicht elektrisch leitenden Material gefüllt ist.

6. Datenkabel-Steckverbinder nach einem der vorhergehenden Ansprüche, **dadurch gekennzeichnet, dass** der Kontaktträger (300) aus einem Kunststoffmaterial mit einer definierten Dielektrizitätskonstante ε_{R} aufgebaut ist.

7. Datenkabel-Steckverbinder (1) nach einem der vorhergehenden Ansprüche, **dadurch gekennzeichnet, dass** der Kontaktträger (300) dazu ausgebildet ist, den ersten und/oder zweiten Kontakt (104; 105) in den Kontaktträger (300) aufzunehmen, die in Axialrichtung des Datenkabel-Steckverbinders (1) an einer ersten Position einen Versatz im Außendurchmesser aufweisen, wozu der Kontaktträger (300) in Axialrichtung des Datenkabel-Steckverbinders (1) an einer zweiten Position einen Versatz im Außendurchmesser aufweist.

8. Datenkabel-Steckverbinder nach einem der Ansprüche 4 bis 7, **dadurch gekennzeichnet, dass** die Impedanz in dem Datenkabel-Steckverbinder (1) durch Variation mindestens eines der Parameter
• Verlauf der Durchgänge (205)
• Größe des Zwischenraums (203)
• Dielektrizitätskonstante ε_{R} des den Zwischenraum (203) füllenden Materials
• Dielektrizitätskonstante ε_{R} des Kontaktträgers (300)
• Erste Position des Versatzes im Außendurchmesser des Kontakts (104; 105)
• Zweite Position des Versatzes im Außendurchmesser des Kontaktträgers (300)
derart eingestellt wird, dass die Impedanz in dem Datenkabel-Steckverbinder (1) einem vorgegebenen Impedanzwert entspricht.

9. Datenkabel-Steckverbinder nach Anspruch 8, **dadurch gekennzeichnet, dass** empirisch ermittelte Parameter verwendet werden, bei denen in Messungen mittels Zeitbereichsreflektometrie-Messgeräten in einem mit einem Datenkabel (100) verbundenen Datenkabel-Steckverbinder (1) keine Impedanzänderungen oder Störungen angezeigt werden, die eine Datenübertragung mit der Datenübertragung mit der gewünschten Datenrate stören.

10. Datenkabel-Steckverbinder nach einem der vorherigen Ansprüche, **dadurch gekennzeichnet, dass** der Schirmungsanschluss (9) für die Leitungsschirmung (103) an dem Impedanz-Transmitter (200) ausgebildet ist und der Impedanz-Transmitter (200) elektrisch leitend mit der Steckerschirmung (10) in Verbindung steht.

11. Datenkabel-Steckverbinder nach einem der vorhergehenden Ansprüche, **dadurch gekennzeichnet, dass** die Anschlussführungen (201, 202) in eine gemeinsame Ausnehmung des Impedanz-Transmitters (200) münden.

12. Datenkabel-Steckverbinder nach einem der vorhergehenden Ansprüche, **dadurch gekennzeichnet, dass** an die Kabelanschlussseite (3) des Datenkabel-Steckverbinders (1) das Datenkabel (100) eines Kraftfahrzeugs angeschlossen ist, wobei das Datenkabel (100) mit dem Fahrzeugdatennetz des Kraftfahrzeugs verbunden oder verbindbar ist.

13. Verwendung eines Datenkabel-Steckverbinders nach einem der vorhergehenden Ansprüche zum Verbinden von zwei Datenkabeln mit isolierten Leitern unterschiedlicher Durchmesser.

## Claims

1. A data cable connector for data transmission having a plug body (2), which has a cable connection side (3), a plug connection side (4) and a plug shield (10),
the cable connection side (3) being designed for connecting a shielded data cable (100) having at least one first insulated conductor (101) and a second insulated conductor (102) for data transmission and a wire shield (103) surrounding the first and second insulated conductors (101, 102), and having a first connection channel (201) for the first insulated conductor (101), a second connection channel (202) for the second insulated conductor (102) and a shield connection (9) for the wire shield (103);
the plug connection side (4) having a contact carrier (300) with contact openings (301) for accommodating first and second contacts (104; 105) which can be connected to the first and second insulated conductors (101, 102), the contact openings (301) being arranged as through openings (302) in the contact carrier (300) running parallel at a contact distance in an axial direction of the data cable connector (1);
an impedance transmitter (200) made from electrically conductive material (204) being arranged in the cable connection side (3) of the data cable connector (1), in which impedance transmitter the first connection channel (201) and the second connection channel (202) are constructed, electrically conductive material (204) being formed at least in certain sections between the first connection channel and the second connection channel, and the impedance transmitter (200) being constructed adjacently to the contact carrier (300), openings of the first and the second connection channel (201; 202) facing the contact carrier (300) opening into the through openings (302) of the contact carrier (300);
**characterized in that** the plug body (2) has a cable inlet with a strain relief clamp (5) and a clamping nut (6) on the cable connection side (3), wherein the strain relief clamp (5) can be pressed against the impedance transmitter (200) by screwing on the clamping nut (6) and the cable inlet is arranged opposite the connection channels (201, 202) in the impedance transmitter (200), and wherein the conductor shield (103) is pressed between a surface of the strain relief clamp (5) directed towards the plug connection side (4) and a surface (3) of the impedance transmitter (200) directed towards the cable connection side.

2. The data cable connector according to Claim 1, **characterized in that** the spacing of the first connection channel (201) and the second connection channel (202) changes with respect to the axial direction of the data cable connector (1).

3. The data cable connector according to Claim 1 or 2, **characterized in that** the length of the connection channels (201, 202) in the data cable connector (1) is the same.

4. The data cable connector according to one of the preceding claims, **characterized in that** the first and the second connection channel (201; 202) are constructed as non-parallel running passages (205) in the impedance transmitter (200).

5. The data cable connector according to Claim 4, **characterized in that** an internal diameter of the passages (205) is constructed to be larger than an outer diameter of the insulated conductors (101, 102) of the data cable (100), so that an intermediate space (203) is formed between an insulated conductor (101; 102) of the data cable (100) guided in the passage (205) and the impedance transmitter (200), which intermediate space is filled with an electrically non-conductive material.

6. The data cable connector according to one of the preceding claims, **characterized in that** the contact carrier (300) is built from a plastic material with a defined dielectric constant ε_{R}.

7. The data cable connector (1) according to one of the preceding claims, **characterized in that** the contact carrier (300) is designed to accommodate the first and/or second contact (104; 105) in the contact carrier (300), which have an offset in the outer diameter at a first position in the axial direction of the data cable connector (1), to which end the contact carrier (300) has an offset in the outer diameter at a second position in the axial direction of the data cable connector (1).

8. The data cable connector according to one of Claims 4 to 7, **characterized in that** the impedance in the data cable connector (1) is adjusted by varying at least one of the parameters
• course of the passages (205)
• size of the intermediate space (203)
• dielectric constant ε_{R} of the material filling the intermediate space (203)
• dielectric constant ε_{R} of the contact carrier (300)
• first position of the offset in the outer diameter of the contact (104; 105)
• second position of the offset in the outer diameter of the contact carrier (300)
in such a manner that the impedance in the data cable connector (1) corresponds to a predetermined impedance value.

9. The data cable connector according to Claim 8, **characterized in that** empirically determined parameters are used, for which in measurements by means of time domain reflectometry measuring devices in a data cable connector (1) connected to a data cable (100) no impedance changes or faults, which disrupt data transmission with data transmission having the desired data rate, are indicated.

10. The data cable connector according to one of the preceding claims, **characterized in that** the shield connection (9) for the wire shield (103) is constructed on the impedance transmitter (200) and the impedance transmitter (200) is electrically conductively connected to the plug shield (10).

11. The data cable connector according to one of the preceding claims, **characterized in that** the connection channels (201, 202) open into a common recess of the impedance transmitter (200).

12. The data cable connector according to one of the preceding claims, **characterized in that** the data cable (100) of a motor vehicle is connected to the cable connection side (3) of the data cable connector (1), wherein the data cable (100) is or can be connected to the vehicle data network of the motor vehicle.

13. The use of a data cable connector according to one of the preceding claims for connecting two data cables with insulated conductors of different diameters.

## Revendications

1. Connecteur enfichable de câble de données pour une transmission de données avec un corps de fiche (2), qui comporte un côté de raccordement de câble (3), un côté de raccordement de fiche (4) et un blindage de fiche (10), sachant que
le côté de raccordement de câble (3) est constitué pour raccorder un câble de données blindé (100) à au moins un premier conducteur isolé (101) et un deuxième conducteur isolé (102) pour la transmission de données et un blindage de ligne (103) entourant les premier et deuxième conducteurs isolés (101, 102) et un premier conduit de raccordement (201) pour le premier conducteur isolé (101) et un deuxième conduit de raccordement (202) pour le deuxième conducteur isolé (102) et un raccordement de blindage (9) pour le blindage de conducteur (103),
le côté de raccordement de fiche (4) comporte un porte-contacts (300) avec des ouvertures de contacts (301) pour loger les premier et deuxième contacts (104 ; 105) pouvant être reliés au premier et deuxième conducteurs isolés (101, 102), sachant que les ouvertures de contacts (301) sont disposées sous la forme d'ouvertures de passage (302) dans le porte-contacts (300) passant parallèlement dans un intervalle de contacts dans une direction axiale du connecteur enfichable de câble de données (1)
un transmetteur d'impédance (200) en matériau électroconducteur (204) est disposé dans le côté de raccordement de câble (3) du connecteur enfichable de câble de données (1), dans lequel sont constitués le premier conduit de raccordement (201) et le deuxième conduit de raccordement (202), sachant qu'entre le premier conduit de raccordement et le deuxième conduit de raccordement est constitué au moins par endroits un matériau électroconducteur (204) et sachant que le transmetteur d'impédance (200) est constitué adjacent au porte-contacts (300), sachant que les ouvertures tournées vers le porte-contacts (300) des premier et deuxième conduits de raccordement (201; 202) débouchent dans les ouvertures de passage (302) du porte-contacts (300),
**caractérisé en ce que** le corps de fiche (2) sur le côté de raccordement de câble (3) comporte un conduit de câble avec un collier de décharge de traction (5) et un écrou de tension (6), sachant que le collier de décharge de traction (5) peut être pressé contre le transmetteur d'impédance (200) en vissant l'écrou de tension (6) et l'entrée de câble opposée aux conduits de raccordement (201, 202) est disposée dans le transmetteur d'impédance (200) et sachant qu'une pression du blindage de conducteur (103) a lieu entre une surface orientée vers le côté de raccordement de fiche (4) du collier de décharge de tension (5) et une surface (3) orientée vers le côté de raccordement de câble du transmetteur d'impédance (200).

2. Connecteur enfichable de câble de données selon la revendication 1, **caractérisé en ce que** la distance entre le premier conduit de raccordement (201) et le deuxième conduit de raccordement (202) varie par rapport à la direction axiale du connecteur enfichable de câble de donnée (1).

3. Connecteur enfichable de câble de donnée selon la revendication 1 ou 2, **caractérisé en ce que** la longueur des conduits de raccordement (201, 202) est identique dans le connecteur enfichable de câble de donnée (1).

4. Connecteur enfichable de câble de données selon l'une quelconque des revendications précédentes, **caractérisé en ce que** le premier et le deuxième conduit de raccordement (201 ; 202) sont constitués sous la forme de passages (205) passant de façon non parallèle dans le transmetteur d'impédance (200).

5. Connecteur enfichable de câble de données selon la revendication 4, **caractérisé en ce qu'**un diamètre intérieur des passages (205) est constitué plus grand qu'un diamètre extérieur des conducteurs isolés (101, 102) du câble de données (100) de telle manière qu'un espace intermédiaire (203), qui est rempli d'un matériau non électroconducteur, est constitué entre un conducteur isolé (101 ; 102) du câble de données (100), passé dans le passage (205) et le transmetteur d'impédance (200).

6. Connecteur enfichable de câble de données selon l'une quelconque des revendications précédentes, **caractérisé en ce que** le porte-contacts (300) est constitué d'un matériau à base de matière plastique avec une constante diélectrique ε_{R} définie.

7. Connecteur enfichable de câble de données (1) selon l'une quelconque des revendications précédentes, **caractérisé en ce que** le porte-contacts (300) est constitué pour loger le premier et/ou le deuxième contact (104 ; 105) dans le porte-contacts (300), qui comportent en direction axiale du connecteur enfichable de câble de données (1) un déport dans le diamètre extérieur à une première position, le porte-contacts (300) comportant pour cela un déport dans le diamètre extérieur dans la direction axiale du connecteur enfichable de câble de données (1) à une deuxième position.

8. Connecteur enfichable de câble de données selon l'une quelconque des revendications 4 à 7, **caractérisé en ce que** l'impédance dans le connecteur enfichable de câble de données (1) est réglée par variation d'au moins un des paramètres suivants
• profil des passages (205),
• taille des l'espace intermédiaire (203),
• constante diélectrique ε_{R} du matériau remplissant l'espace intermédiaire (203), en tant que
• constante diélectrique ε_{R} du porte-contacts (300),
• première position du déport dans le diamètre extérieur du contact (104 ; 105),
• deuxième position du déport dans le diamètre extérieur du porte-contacts (300),
de telle manière que l'impédance dans le connecteur enfichable de câble de données (1) correspond à une valeur d'impédance prédéfinie.

9. Connecteur enfichable de câble de données selon la revendication 8, **caractérisé en ce que** des paramètres déterminés de manière empirique sont utilisés, pour lesquels aucune variation d'impédance ou anomalie n'est affichée dans les mesures au moyen d'appareils de mesure de réflectométrie temporelle dans un connecteur enfichable de câble de données (1) relié à un câble de données (100), qui perturbe une transmission de données avec la transmission de données avec le débit de données souhaité.

10. Connecteur enfichable de câble de données selon l'une quelconque des revendications précédentes, **caractérisé en ce que** le raccordement de blindage (9) pour le blindage de conducteur (103) est constitué sur le transmetteur d'impédance (200) et le transmetteur d'impédance (200) se trouve en liaison avec le blindage de fiche (10) de manière électroconductrice.

11. Connecteur enfichable de câble de données selon l'une quelconque des revendications précédentes, **caractérisé en ce que** les conduits de raccordement (201, 202) débouchent dans un évidement commun du transmetteur d'impédance (200).

12. Connecteur enfichable de câble de données selon l'une quelconque des revendications précédentes, **caractérisé en ce que** le câble de données (100) d'un véhicule automobile est raccordé au côté de raccordement de câble (3) du connecteur enfichable de câble de données (1), sachant que le câble de données (100) est relié ou peut être relié au réseau de données de véhicule du véhicule automobile.

13. Utilisation d'un connecteur enfichable de câble de données selon l'une quelconque des revendications précédentes pour le raccordement de deux câbles de données à des conducteurs isolés de diamètres différents.
